# EUROPEAN PATENT APPLICATION

(11) **EP 1 376 565 A1**
(43) Date of publication of application: **02.01.2004**
(21) Application number: 02394073.7
(22) Date of filing: 12.06.2002
(51) Int. Cl.: G11B 7/26, G11B 23/40, G11B 33/04

(54) **Production of optical disc products**

(71) Applicant: Matador Innovation Limited, Blanchardstown, Dublin 15 (IE)
(72) Inventor: Walsh, William, Kilcullen, County Kildare (IE)
(74) Representative: Weldon, Michael James

(57) **Abstract**

Optical disc products such as software CDRs, movie DVDs, and audio CDs are produced in different production lines (1-3). There is in-line machine vision inspection (31,32) of discs during printing and downstream, with automatic ejection (35) of faulty products. Products are weighed (45) as they arrive in a partitoned section of an accumulator (40) so that bundles of ten are identified. First and successive packing labels are printed (55) only after successful validation of pre-set numbers of bundles, boxes, or cartons. The controller (10) prevents printing of a packing batch summary label if all recorded and printed discs have not been packed, scanned, or rejected.

## Description

### Field of the Invention

The invention relates to production of optical disc products such as software, CD, or DVD products.

### Prior Art Discussion

United States Patent Specification No. US5959944 (The Music Connection Corp.) describes production of such products. There is audio data acquisition and storage followed by CD recording and title indexing. A CD is recorded, inserted in a box for shipment, and packaged under control of a production controller.

While this process appears to be effective for audio disc recording aspects, there are problems in general in the industry in ensuring that short-run production batches are correctly controlled in situations where there are multiple lines operating simultaneously and each line has frequent batch changes. In such situations there is often production control at an informal level for each line on the basis that a structured and rigorous control system would not have sufficient flexibility for such a production environment. There is a perception that rigorous control systems are only suited to high-volume long-run production environments.

The invention addresses this problem.

### SUMMARY OF THE INVENTION

According to the invention, there is provided a method of producing optical disc product items in a plurality of production lines each producing a different type of optical disc product, and being controlled by a controller connected to a control database and to process devices in the production lines, the method comprising the steps of:-
in each production line, performing in-line machine vision inspection of at least a sample set of discs during printing, automatically ejecting faulty printed discs, and recording an identifier for each ejected printed disc;
inserting each printed disc into a disc container and individually labelling each disc container;
scanning the label of each disc container in turn on each line, inspecting each container and automatically ejecting each container having a label which is incompatible with product batch reference data or which is missing a label;
in each production line weighing bundles of disc containers collectively, and validating each bundle weight reading against a reference bundle weight range;
in each production line, monitoring the number of validated bundles, and printing a first packing label at each associated line only after successful validation of each of a pre-set number of bundles for a first packing unit;
in each production line, monitoring the number of first-level packing labels and printing a second-level label at each associated line only after printing of a pre-set number of first-level packing labels, and
in each production line, monitoring the number of second-level labels and printing a batch-summary label at each associated line only after printing of a pre-set number of second-level labels.

In one embodiment, the product items are accumulated in an accumulator and are weighed as they are accumulated to determine when the bundle quantity is reached.

In another embodiment, the accumulator is directly fed by a conveyor at which the product item labels are scanned.

In a further embodiment, the controller links a batch with a unique address for a dedicated control station associated with each production line.

In one embodiment, the labels are printed at a printer physically adjacent to the associated control station.

In another embodiment, the controller causes each faulty product item to be ejected immediately after scanning.

In a further embodiment, the ejected items are pushed off the conveyor by a ram into a reject bin.

In one embodiment, the controller captures, for each batch, an input quantity of discs, the number of recorded discs, and the number of printed discs, and prevents printing of a batch summary label if all recorded and printed discs have not been packed, scanned, or rejected.

In another embodiment, faulty printed discs are ejected into a closed bin via a chute.

In a further embodiment, the controller maintains a database having a set of production data associated with each line at any point in time.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a set of high-level flow diagrams showing multiple optical disc product production lines;
Fig. 2 is a diagram showing final production stages for a software product line; and
Figs. 3 to 6 are screen shots illustrating operation of the controller.

### Description of the Embodiments

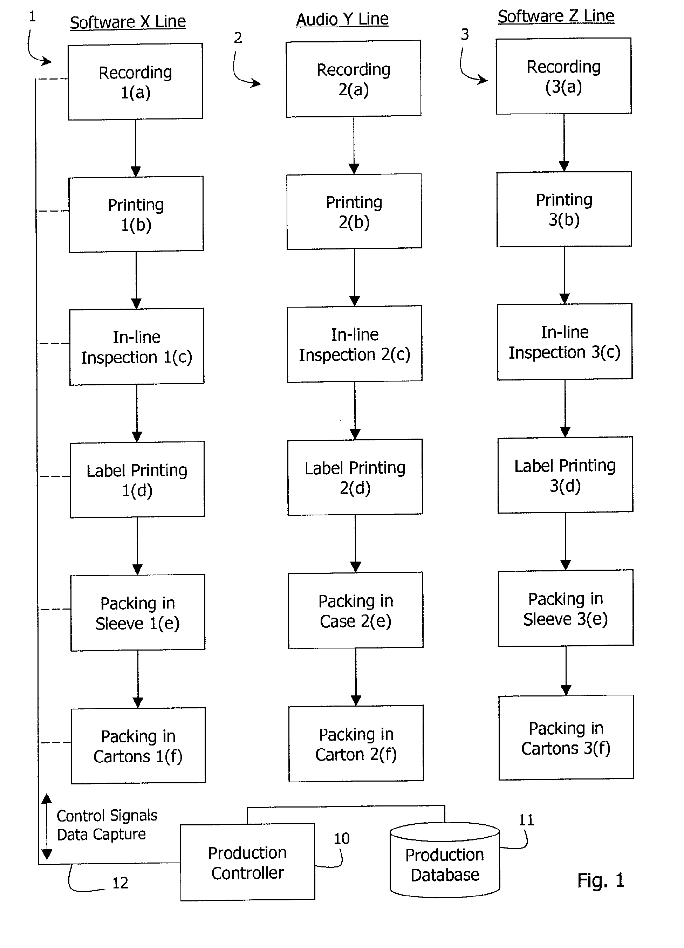

Referring to Fig. 1 an optical disc product production facility has multiple production lines. Three lines are illustrated, namely a line 1 for Software X products, a line 2 for Audio Y product, and a line 3 for Software Z product.

In the line 1 there are recording 1(a), printing 1(b), in-line inspection 1(c), label printing 1(d), packaging 1(e), and final packing 1(f) steps. There are equivalent steps 2(a) to 2(f) for the line 2, and steps 3(a) to 3(f) for the line 3, These equivalent steps, while similar at a high level, are different in specific detail. For example, the recording operations are very different for software and audio products. Also, for example, the audio products of the line 2 are inserted in plastics cases, whereas the software products of the lines 1 and 3 are inserted in card sleeves. The sleeves are shipped in cartons to the customer for insertion in final-product cartons with literature.

The various production stages are linked to a production controller 10 with a database 11 via a local area network (LAN) 12.

In this production environment it is very important to ensure that there is no cross-over of product between lines, which may be physically close to each other. It is also, of course, important to ensure that there is excellent quality control at each stage of each production line.

The recording and printing stages are each preceded by QC short runs for validation purposes. For example, the printing stages 1(b), 2(b), and 3(b) are preceded by print verification on 100 discs and use of in-line inspection, rejection, and print head modification. Printing is performed by print heads mounted around a disc feed carousel. Rejects are ejected off the carousel into an enclosed reject bin via a chute which is also completely enclosed. Thus, it is not possible for an operator to make the mistake of returning a faulty disc to the work-in-progress.

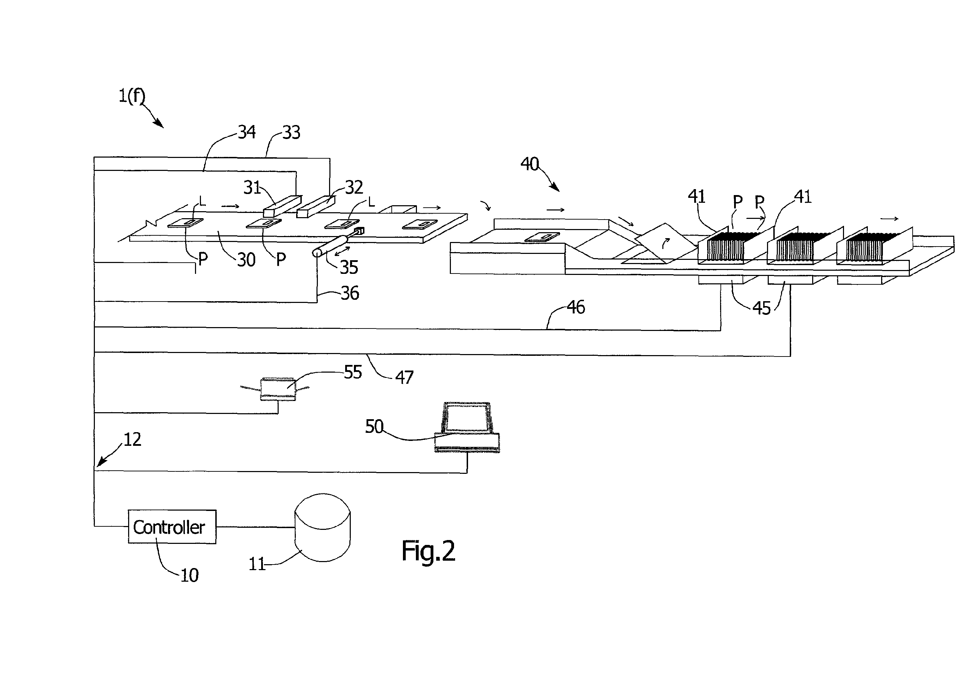

Referring to Fig. 2 the packaging station 1(f) is illustrated. A conveyor 30 conveys products P, namely CD ROM discs in flexible envelopes. Each product P has been individually labelled with a label L having a product identifier (PID) unique to the type of product (batch), and an item identifier unique to the individual product.

Two bar code scanners 31 and 32 are mounted over the conveyor 30 for automatically reading all labels L and routing scanned data via cables 33 and 34 to the LAN 12. The controller 10 performs in-line verification and directs a ram 35 via a cable 36 to eject any rejects immediately after the bar code reading.

In-line inspection operations are also performed at earlier production stages. These include machine vision system reading of a disc hub bar code, and machine vision system inspection of quality of printing on the discs.

The conveyor 30 conveys the products P to an accumulator 40 having dividers 41 for grouping bundles of ten products P. Each bundle is collectively weighed by a weigh sensor which feeds the weight data to the controller 11. The controller 11 validates the weight to check that there are ten in the bundle and directs a printer 55 to print a label for a box holding fifteen bundles of ten products P. This, however, only happens after that exact number has been sensed by the bar code readers 31 and 32 as correct and has been weighed in the accumulator 40.

Again, weight sensing and prevention of downstream transfer of product is also performed at earlier stages.

As the boxes are completed and labelled, when four such labels have been printed, the controller 10 directs printing of a carton label for a carton of four boxes. Again, there must be a full number of products and verification at the carton level.

Furthermore, a final or summary label for a pallet is generated only after correct weight of fifteen cartons has been detected. During production, the controller 10 captures the number of recorded and printed discs. It prevents printing of a packaging batch summary label if all recorded and printed discs have not been packed, scanned, or rejected.

The labels provide full traceability because they include:-
- the PID,
- the product quantity in the relevant container, and
- the time and date.

The controller 10 determines from the database 11 the target batch size (total number of products). The controller 10 also automatically captures the number of discs for that batch which were recorded and printed. It prevents output of a full batch validation until all of these numbers have been identified to it at the packing stage by the readers 31 and 32.

All of the weight checking, label printing, and data display is performed physically at each production line. Each workstation is located at and is uniquely associated with each production line. This minimises the chances of product, container, or label cross-over.

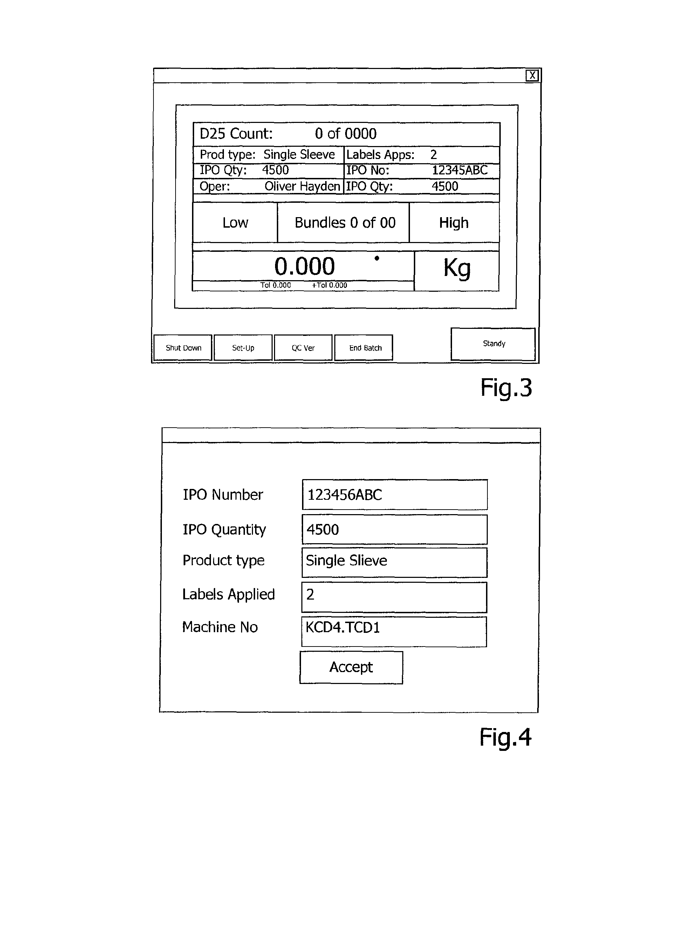

A simple display generated by the controller 10 is shown in Fig. 3. The full batch quantity "IPO Qty" is displayed as are:
- the number of labels per product P,
- the batch code "IPO No.", and
- the bundle weight.

The batch data is inputted by an operator using a screen as shown in Fig. 4 in which there is identification of the machine. Important aspects are definition of the product type with correct identifier codes and a description, and definition of the number of labels to be applied. Also, the particular workstation is identified.

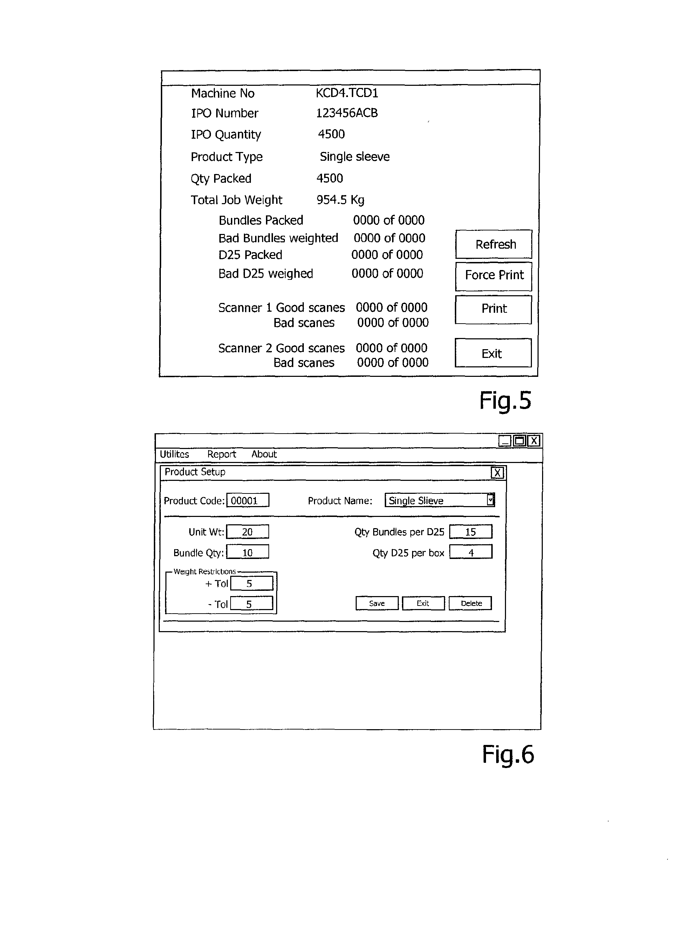

A screen shot for end-of-batch is shown in Fig. 5. This summarises the numbers of bundles packed and rejected, and also the numbers of good and bad individual product scans.

Set-up for an individual product is shown in Fig. 6. As illustrated, an operator at a supervisory level inputs the unit weight, bundle quantity, number of bundles per box, number of boxes per carton, and the weight tolerances. A product type such as "single sleeve" is selected using a drop-down menu. This data is inputted to set up a batch and the controller 10 subsequently retrieves this data from the database 11 during production.

It will be appreciated that the invention provides for comprehensive visual inspection by operators with simultaneous enforced quality procedures as directed by the controller 10. This is particularly effective because packing at one of multiple levels of granularity is controlled automatically in response to scanning of weight captures. These levels of control are easily visualised by operators so that controller outputs are clearly related to physical product in each line. The controller 10 can achieve this level of control without the need for complex automated process equipment, or indeed a complex internal architecture. The latter comprises simply a relational database in which there is a primary key and table for each batch.

The invention is not limited to the embodiments described but may be varied in construction and detail.

## Claims

1. A method of producing optical disc product items in a plurality of production lines each producing a different type of optical disc product, and being controlled by a controller (10) connected to a control database (11) and to process devices in the production lines (1, 2, 3), the method comprising the steps of:-
in each production line, performing in-line machine vision inspection of at least a sample set of discs during printing, automatically ejecting faulty printed discs, and recording an identifier for each ejected printed disc;
inserting each printed disc into a disc container and individually labelling each disc container;
scanning the label of each disc container in turn on each line, inspecting each container and automatically ejecting each container having a label which is incompatible with product batch reference data or which is missing a label;
in each production line weighing bundles of disc containers collectively, and validating each bundle weight reading against a reference bundle weight range;
in each production line, monitoring the number of validated bundles, and printing a first packing label at each associated line only after successful validation of each of a pre-set number of bundles for a first packing unit;
in each production line, monitoring the number of first-level packing labels and printing a second-level label at each associated line only after printing of a pre-set number of first-level packing labels, and
in each production line, monitoring the number of second-level labels and printing a batch-summary label at each associated line only after printing of a pre-set number of second-level labels.

2. A method as claimed in claim 1, wherein the product items are accumulated in an accumulator and are weighed as they are accumulated to determine when the bundle quantity is reached.

3. A method as claimed in claim 2, wherein the accumulator is directly fed by a conveyor at which the product item labels are scanned.

4. A method as claimed in any preceded claim, wherein the controller links a batch with a unique address for a dedicated control station associated with each production line.

5. A method as claimed in claim 4, wherein the labels are printed at a printer physically adjacent to the associated control station.

6. A method as claimed in any preceding claim, wherein the controller causes each faulty product item to be ejected immediately after scanning.

7. A method as claimed in claim 6, wherein the ejected items are pushed off the conveyor by a ram into a reject bin.

8. A method as claimed in any preceding claim, wherein the controller captures, for each batch, an input quantity of discs, the number of recorded discs, and the number of printed discs, and prevents printing of a batch summary label if all recorded and printed discs have not been packed, scanned, or rejected.

9. A method as claimed in any preceding claim, wherein faulty printed discs are ejected into a closed bin via a chute.

10. A method as claimed in any preceding claim, wherein the controller maintains a database having a set of production data associated with each line at any point in time.

11. A production method substantially as described with reference to the drawings.

12. Optical disc products whenever produced by a method as claimed in any preceding claim.
